# EUROPEAN PATENT SPECIFICATION

(11) **EP 3 655 668 B1**
(45) Date of publication and mention of the grant of the patent: **08.12.2021**
(21) Application number: 18737393.1
(22) Date of filing: 22.06.2018
(51) Int. Cl.: F16B 13/02, E04B 2/08, F16B 19/00

(54) **IMPROVED DOWEL**
VERBESSERTER DÜBEL
CHEVILLE AMÉLIORÉE

(30) Priority: 21.07.2017 GB 201711734
(43) Date of publication of application: 27.05.2020
(73) Proprietor: Munro Sawmills Ltd, Dingwall, Ross-shire IV15 9UN (GB)
(72) Inventor: BLAKE, Philip, Dingwall Ross-shire IV15 9LF (GB)
(74) Representative: Macdonald, Kate
(86) International application number: PCT/GB2018/051758
(87) International publication number: WO 2019/016504

(56) References cited:
- GB-A- 2 363 808

## Description

### Field of the Invention

The present invention relates to a dowel, for example a dowel for a construction kit suitable for constructing a structure such as a wall. The invention also relates to a construction kit, an extraction tool, and a method of constructing and de-constructing a wall.

### Background to the Invention

It is known to construct a solid wall using bricks and mortar, the bricks being typically substantially cuboid in shape. Typically, an alignment pattern is used in which the second layer bricks on the top surface of the first layer bricks are such that their side faces align with the vertical centrelines of the front and rear faces of the first layer bricks. The third layer can be added in a similar manner, e.g. such that the third layer bricks are in alignment with the first layer bricks. The fourth layer is added in a similar manner, such that the fourth layer bricks are in alignment with the second layer bricks. Variations on this alignment pattern may be used.

It is relatively time-consuming and expensive to construct such a wall. It is difficult to align the bricks, which makes it awkward for unskilled people to construct a wall themselves.

If a less permanent structure is required, one known solution is to use a wooden fence with long, thin sections of wood which are held together by nails or the like. However, these are much less sturdy than brick walls. Also, these are not easy to construct, since the sections of wood must be correctly aligned and the nails or other fixings applied whilst retaining the correct alignment. Furthermore, de-construction is not particularly easy, since it would involve removal of the nails or other fixings, which may well have begun to rust by that time.

Wooden dowel systems to fix together wooden blocks are known, and simple cylindrical dowels and many gadgets exist in the marketplace for positioning and determining the depth of holes to receive the dowels. Joints created by using such wooden dowels have to be clamped and glued to form a permanent joint It would therefore be desirable to provide a hidden dowelling system that does not need other types of fixing such as glue.

Such a system has been proposed in GB2363807B FAWCETT I and GB2363808B FAWCETT II. The system in FAWCETT is capable of being constructed using few tools and does not require professional skill to construct. The system of FAWCETT allows, in one embodiment, for use of dowels hammered into respective holes of blocks, which can be levered apart to de-construct if required. In practice, this is difficult to carry out. In another embodiment when a more permanent wall is required, a wedge or peg is used to force apart side cheeks of an upper portion of the dowel to fix the dowel in its receiving hole thereby locking the blocks together. Should de-construction be required in either case, it might become necessary to lever the blocks apart sufficiently and then insert a saw to saw through each dowel individually or even to drill out the dowels. This is undesirable being exceedingly difficult to carry out, time consuming, risks incurring damage to the blocks and prevents easy reuse. Furthermore, because part of the dowel (usually plastic) may be left inside a wooden block, such composite structures are very difficult to reuse or recycle.

There is therefore a need for a wall(s) which can be easily and cheaply constructed and easily capable of being de-constructed if required. This would be useful for non-professional builders who wish to construct walls, or structures comprising walls, themselves, for example in their gardens and may wish later to construct differently shaped walls or structures using the same components or to move such walls or structures to a different location.

There is also a need for a system to allow both temporary i.e. capable of being dismantled, and permanent construction without the use of glue or clamps or other such awkward and messy fittings. Furthermore, it should not require a complicated system to determine the depth of the receiving holes and correctly align the dowels.

There is therefore also a need for a dowel for constructing such wall(s) and system(s).

Constructing dowel(s) of plastic, or other mouldable material, for such wall(s) and system(s) may be problematic because of the difficulty in forming, and maintaining the form of, external surface features thereof, during manufacture of such dowel(s).

The present invention seeks to alleviate one or more of the above problems and other problems apparent from this disclosure.

### Statements of the Invention

In a first aspect of the invention there is provided a dowel for joining blocks comprising: at a first end, a generally cylindrical first portion having a first internal hole along it, the first portion configured for radial expansion when a radial force is applied within the first internal hole; at a second end, a generally cylindrical second portion (e.g. configured for snug/hammer fit reception into a hole in which the second portion is capable of being received); depending from the second portion, a generally cylindrical, preferably conical, third portion, configured for reception into the internal first hole of a further dowel to provide a radial force capable of expanding a first portion of a further dowel; a radial projection between the first and second portions configured to limit insertion of the second portion into a hole in a block in which the second portion is capable of being received; at least the second portion, and preferably the first and second portions, having external surface features (e.g. raised external surface features) configured to resist translational movement relative to a hole in which the respective portion is capable of being received (e.g. to resist extraction of that respective portion); and further wherein, the external surface features of at least the second portion comprise an external first screw thread configured to provide rotational movement relative to a hole into which the second portion is capable of being received, to enable extraction of the second portion from the hole (e.g. when a rotational force is applied to the dowel relative to the hole).

In a second aspect of the invention there is provided a kit comprising at least one dowel as described herein and at least one of:
- a block, having at least one hole, and preferably at least two holes, for receiving a dowel;
- a plurality of blocks, each having at least one hole, and preferably at least two holes, for receiving a dowel;
- an extraction tool, for extracting the dowel from a block comprising, at a proximal end, a shank, and optionally a handle, and, at a distal end, a shaped member for engaging with a correspondingly shaped second internal hole of the dowel.

In a third aspect of the invention (not claimed) there is provided an extraction tool comprising at a proximal end, a shank, and optionally a handle, and, at a distal end, a shaped member configured (e.g. sized and shaped) to engage with the shaped second internal hole of a dowel as described herein. Preferably, the shaped member is elongate e.g. a tapered rod of shaped cross-section.

In a fourth aspect of the invention, there is provided a method of constructing and de-constructing a wall comprising: a) inserting the second end of a first dowel as described herein into a first cylindrical hole of a first block, preferably by translational motion (e.g. hammer in) or optionally by rotational motion (e.g. screw in) the first cylindrical hole having a seat about a periphery on a top face of the block, until the radial projection is engaged in the seat; b) rotating the first dowel to extract it from the first block.

Preferably, the first screw thread comprises a cross-section configured to facilitate translational insertion (e.g. relative to the action of extraction) and to resist translational extraction (e.g. relative to the action of insertion). Preferably, the first screw thread has a generally or substantially triangular cross-section. Preferably, the first screw thread has, a triangular cross-section comprising: a slanted longer first face leading radially outwards from a central, longitudinal axis along the dowel, in a direction from the third portion towards the second portion; and, a shorter second face generally, or substantially, perpendicular to the central longitudinal axis along the dowel. In this way, the second face of the screw thread acts in a load bearing capacity for resisting translational extraction forces acting on the dowel to extract the dowel from the block.

Preferably, the first screw thread is of substantially constant overall width (i.e. not a tapered screw thread) along the second portion. Preferably, the cross-section of the first screw thread is substantially the same where it is provided along the second portion.

Preferably, the third portion is provided with external surface features comprising an external second screw thread configured to provide rotational movement relative to the first internal hole into which the third portion is capable of being received to enable extraction of the third portion from the first internal hole. Preferably, the second screw thread comprises a cross-section configured to facilitate translational insertion (e.g. relative to the action of extraction) and to resist translational extraction (e.g. relative to the action of insertion). Preferably, the second screw thread has a generally or substantially triangular cross-section. Preferably, the second screw thread has a triangular cross-section comprising: a slanted, longer first face leading radially outwards from a central longitudinal axis of the dowel, in a direction from the third portion towards the second portion; and, a shorter second face, generally, or substantially, perpendicular to the central, longitudinal axis along the dowel. In this way, the second face of the second screw thread acts in a load bearing capacity for resisting translational extraction of the dowel from the block.

The first screw thread and the second screw thread where provided, may have a scalene triangular cross-section (three sides of unequal length) but preferably has also a buttress-type screw thread cross-section in which the shortest side and longest side protrude from the main body of the dowel, the longest side slanted towards the tip of the dowel and the shortest side approximately perpendicular to the longitudinal axis of the dowel (buttress threads may be at an angle of -7° to the perpendicular, but here 0-10° or even 0-15° is acceptable).

Preferably, the second screw thread comprises a tapered screw thread, the (overall) width of the screw thread (and typically the third portion) narrowing in a direction from the second portion to the third portion.

Preferably, the second screw thread is continuous e.g. a continuous structure.

In one or more embodiments the second screw thread may be discontinuous e.g. a discontinuous structure. Preferably this is configured to provide for continuous rotational travel of a dowel on extraction from a hole into which it is to be received (e.g. by having the same pitch and/or cross-section) and appropriate relative positions (of the discontinuous second screw thread portions) as if the second screw thread were continuous. Optionally, the leading edges of the surface features forming the screw thread (especially when discontinuous) may have one or more bevels, or fillets, to reduce the risk of sharp edges catching during removal.

Preferably, the third portion comprises one or more elongate surface recesses defining elongate radial projections (e.g. elongate radial walls), the distal portions of which are configured to provide the second screw thread, optionally, the elongate radial projections forming a generally cruciform or generally Y-shaped, or generally T-shaped cross-section .

Preferably, the elongate surface recesses (and resultant elongate radial projections or radial walls) are generally, or substantially, longitudinal relative to a central axis C of the dowel.

Preferably, the third portion is of solid interior construction. In this way, the third portion is preferably (relatively) substantially incompressible.

Whether continuous or discontinuous, preferably, the respective first and second screw threads are screw threads of substantially the same pitch and/or substantially the same cross-section. Thus, the first and second screw threads are able to interact in a similar way with the internal side wall(s) of the hole of the block and internal side wall(s) of the first internal hole of the dowel respectively.

Preferably, the second portion is of greater diameter than the third portion. Preferably a slanted shoulder portion is provided in-between the first and second screw threads with external surface features that cooperate with the first screw thread on the second portion and the second screw thread on the third portion to provide continuity from the first to the second screw thread.

Preferably, the first screw thread, and second screw thread where provided, are of generally scalene triangular cross-section. Preferably, the first screw thread, and second screw thread where provided, are of generally buttress-thread cross-section.

Preferably, contiguous with the first internal hole, a second internal hole (for example, in the form of a shaped, tapered slot, optionally generally or substantially located within the second portion) is provided to allow an extraction tool to be received therein via the first internal hole. Preferably, the second internal hole comprises one or more first inter-engaging feature(s) (e.g. one or more shaped internal wall(s) or a shaped recess) for interengagement with an extraction tool having corresponding one or more second inter-engaging feature(s) (e.g. a correspondingly shaped distal end). Preferably, the second internal hole has a cross-section of predetermined shape, e.g. generally, or substantially square, rectangular, star-shaped, octagonal etc. Preferably, the second internal hole is tapered, narrowing in a direction from the first portion to the second portion. Preferably, the second internal hole is elongate. Preferably, the dowel is integrally formed, (e.g. manufactured from one piece of material, or conjoined to form a permanently joined integral item).

Preferably, in the method, the first dowel is inserted in a translational manner into the first block. Typically, the second portion is hammer fitted into a hole in the first block.

Preferably, the method comprises:
c) placing a corresponding second cylindrical hole of a second block about the first portion of the first dowel so that the second block rests on the first block;
d) inserting the second end of a second dowel as described herein into the second cylindrical hole of the second block, having a seat about the radial periphery of the second hole, until the radial projection of the second dowel is engaged in the seat;
e) at substantially the same time (in effect with the same motion) as step d, inserting the third portion of the second dowel into the first portion of the first dowel to apply a radial force to the first internal hole, so expanding the first portion of the first dowel until its external surface features engage an inner side wall of the first internal hole; in this way locking the first portion of the first dowel into the first block;
f) rotating the second dowel to extract it from the first dowel and from the second block.

Whilst a seat could be omitted with commensurate changes to the invention, providing and using a seat is preferred.

Preferably, in the method in which one or more of steps (a) (d) and (e) of inserting comprise inserting in a translational motion (i.e. in a direction along the longitudinal axis of the dowel).

Several embodiments and aspects of the invention are described and any one or more features of any one or more embodiments may be used in any one or more aspects of the invention as described above.

### Brief Description of the Invention

The present invention will now be described, by way of example only, with respect to the following figures in which like reference numerals refer to like features.
Figures 1a, 1b and 1c show respectively plan, cross-sectional elevation and side elevation views of an example standard block for use in the invention.
Figure 2 shows perspective views of a prior art dowel and separate wedge (such as that described in GB2363808B) and upper and lower blocks at various stages of construction.
Figures 3a, 3b, and 3c show respectively plan, elevation and perspective views of an example wall constructed using the invention.
Figure 4a, 4b and 4c show respectively perspective, plan and front elevation views of a dowel of the present invention. Figures 4d and 4e show respectively cross-sectional views of the dowel along sections A-A' (section 1) and B-B' (section 2).
Figures 5a and 5b show respectively perspective and cross-sectional views of a first dowel and first block prior to insertion of the first dowel. Figure 5c and 5d show respectively perspective and cross-sectional views of a dowel and first block after insertion of the first dowel.
Figures 6a and 6b show respectively perspective and cross-sectional views of first and second dowels and first and second blocks prior to insertion of the second dowel. Figures 6c and 6d show respectively perspective and cross-sectional view of first and second dowels and first and second blocks after insertion of the second dowel (here second dowel 2b has been inserted) into the second block 1b and also into the upper first portion 22 of the first dowel 2a causing it to expand and grip the side walls of first block 1a, locking these together.
Figures 7a and 7b show respectively perspective views of an extraction tool and an extraction tool in position within a dowel for use during extraction from a block (not shown).
Figures 8a-1 and 8a-2 show respectively perspective and cross-sectional elevation view of first and second blocks stacked one upon the other with a first dowel inserted in-between and a second dowel ready to be inserted into (or a second dowel after extraction out of) a second block (STEP A). Figure 8b-1 shows a perspective view of first and second blocks of

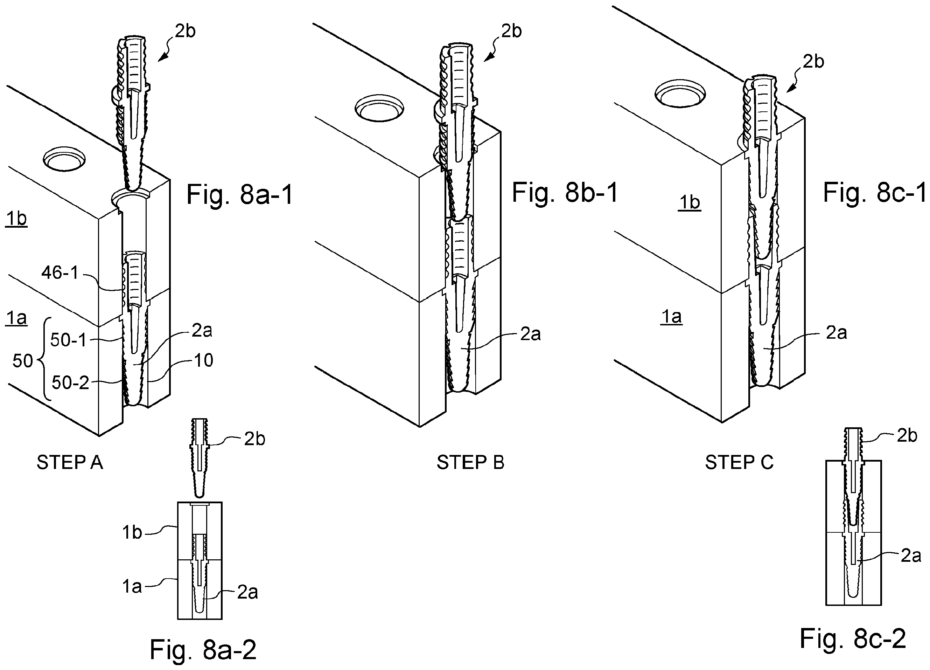

Figure 8a with a second dowel partially inserted into (or partially extracted out of) into a second block C (STEP B). Figures 8c-1 and 8c-2 show respectively perspective and cross-sectional elevation views of first and second blocks of Figures 8a and 8b with a second dowel fully inserted into the second block and into the upper first portion of the first dowel (or prior to extraction from the first dowel and second block) (STEP C).

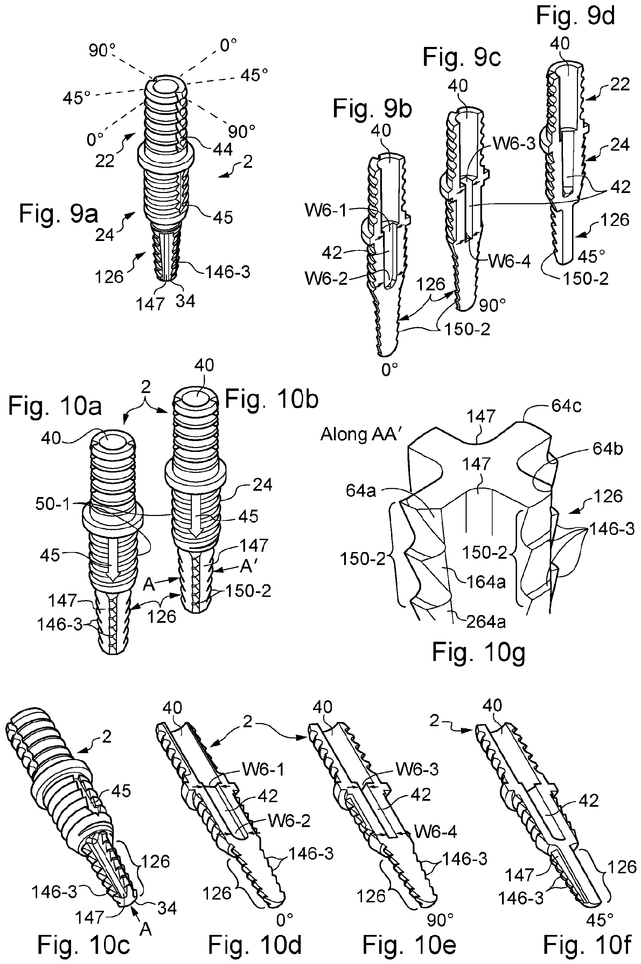

Figures 9a to 9d show respectively perspective (Fig 9a) and cross-sectional perspective views (Figs 9b to 9d) of an alternative dowel, seen at 0°, 90°, and 45°cross-sections, with elongate recesses along the lower third portion (here four equispaced elongate recesses) defining elongate radial projections terminating in discontinuous surface features forming a second screw thread.
Figures 10a to 10f show respectively perspective, front view (Fig 10a), rear view (Fig 10b), bottom view (Fig 10c) and cross-sectional perspective views (Figs 10d to 10f) at 0°, 90°, and 45°cross-sections of an alternative dowel similar to that seen in Figures 9a to 9d, with four equi-spaced elongate recesses along the lower third portion. Figure 10g shows a cross-section through the dowel of Figure 10a along section A-A'.

### Detailed Description of the Invention

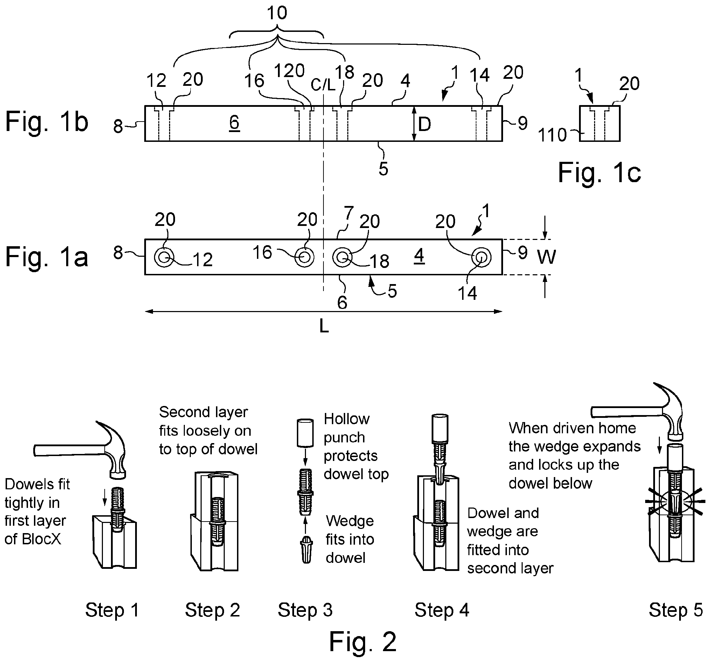

Figures 1a, 1b and 1c show three views of an example standard block, indicated generally by reference numeral 1.

The block 1 is made of wood. A number of different types of wood would be suitable for making the block; the appropriate one would be chosen for the intended application of the wall to be constructed. The wood of the blocks could be treated to improve its durability or to have a decorative finish. It would of course be possible to use different materials, but wood is probably the most convenient for most applications.

Block 1 is substantially cuboid in shape. It has a width W, a vertical depth D and a length L. The dimensions may vary, for example, the length L may be selected to be 6, 8 or 10 x W for every main block. It has a top face 4, a bottom face 5, a front face 6, a rear face 7, a left hand side face 8 and a right hand side face 9.

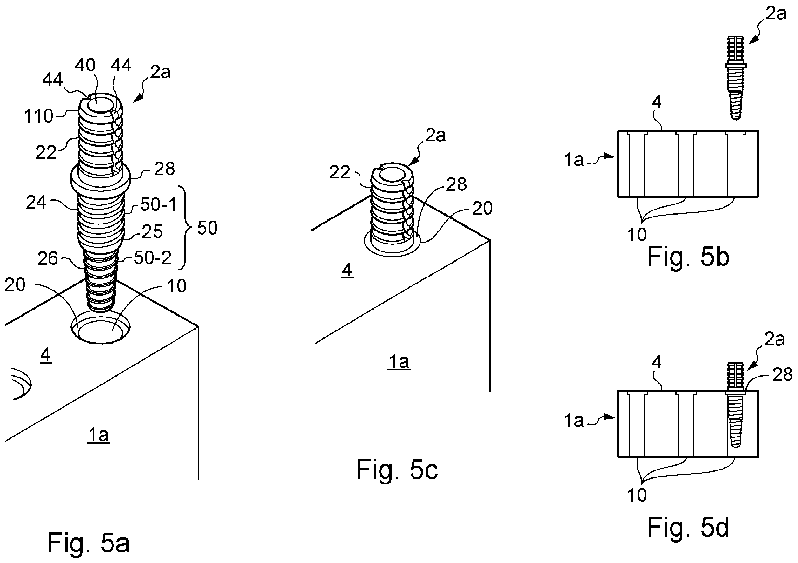

Perpendicular to the top face 4 and centred across the width of the block are drilled four cylindrical through holes 10 which have a diameter in the region of 1/3 W. Referring specifically to block 1, the first hole 12 is centred 1/2 W from the left hand side face 8. The second hole 14 is centred 1/2 W from the right hand side face 9. The third hole 16 is centred 1/2 W to the left of the centreline C/L of the block as measured along the length L, and the fourth hole 18 is centred 1/2 W to the right of the centreline C/L. The distance between the centres of holes 16 and 18 is therefore 1 W. The holes all lie on the longitudinal centre line of the top face 4, with their centres therefore 1/2 W from front face 6. Each of these holes has a seat 20 cut around them suitable (size and shaped) for accepting a collar 28 on the dowel 2, as will be described below with reference to Figures 5, 6 and 8.

These holes 12, 14, 16, 18 are through holes to bottom face 5 and these meet bottom surface 5 at a square cut corner, in other words, typically no seat is provided on bottom face 5. Thus it can be appreciated that (ignoring the seats 20) the block is symmetrical about all of its three central axes. More (e.g. 5, 6, 7, 8 etc) or fewer (e.g. 1, 2, 3) holes may be provided in block 1, but preferably at least two holes are provided.

Figure 2 shows in use, a prior art dowel available from WoodBlocX Ltd, Dingwall, Highland, UK similar to that described in GB2363807B and GB2363808 both to FAWCETT, the contents of which are incorporated by reference.

In step 1, a lower portion of a first prior art dowel is hammer fitted into a first block. In step 2, a second block is loosely fitted on top of the prior art dowel. In step 3, a separate wedge is push fitted into the hole at the bottom of the lower portion of a second prior art dowel and a hollow punch sits on top of a middle collar. In step 4, the second dowel is inserted into the top of the hole of a second block. In step 5, the second dowel is hammer fitted into the second block, and at the same time the separate wedge is driven home into the upper portion of the first dowel causing it to expand outwards, locking the second block onto the first dowel which itself is held firmly in the first block. The first and second dowels are connected via the first and second blocks and also via the push-fit of the separate wedge into the base of the second dowel, and the wedge-fit of the wedge in the top of the first dowel. These push-fit and wedge-fit connections are limited in the amount of tension force these can support, and therefore limited in the structural strength these add to the wall.

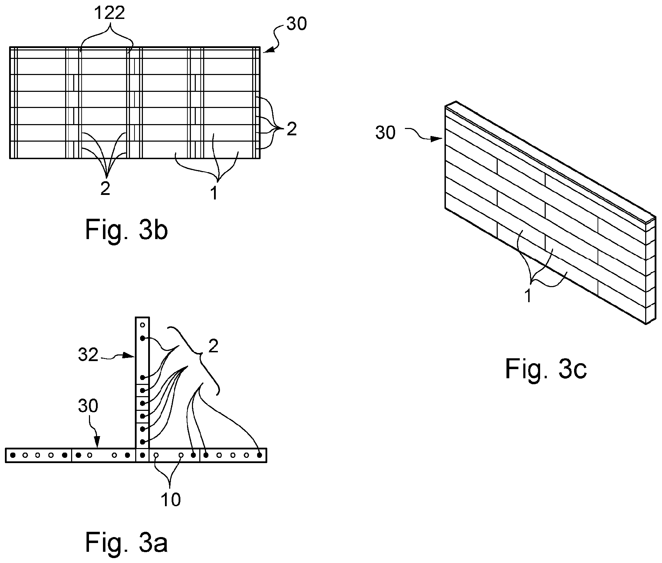

Figures 3a, 3b and 3c show a wall 30 with multiple blocks 1 in a standard overlapping alignment pattern with the adjoining side faces of abutting blocks lining up with the centre line of blocks in the layers above and below. Variations of the alignment pattern are possible and various types of blocks on the same principles can be envisaged to create different structures of different shapes, such as the T-shaped corner structure shown with a front wall 30 and rear wall 32 (here at 90° to wall 30). Further blocks that might be used are described in detail in GB2363807B FAWCETT I.

As can best be seen in Figure 3b, interlinking dowels 2 according to the invention can form continuous, fully interconnected vertical columns 122 within the walls, enhancing stability and strength. When dowels 2 according to invention (preferably either manufactured as one piece or from separate pieces permanently and fixedly connected together to form a single structure) then the dowels can be fixedly retained together (as will be explained below) to form interconnected vertical columns more capable of resisting at least tension (and compression) forces in a vertical direction and lateral forces in a horizontal direction than blocks alone or prior art systems. This is because unlike the prior art dowel of Figure 2, the wedge portion (lower third portion 26) is integral with the remainder of the dowel and in preferred embodiments has external retaining features forming a more permanent connection between dowels so forming a stronger connection overall.

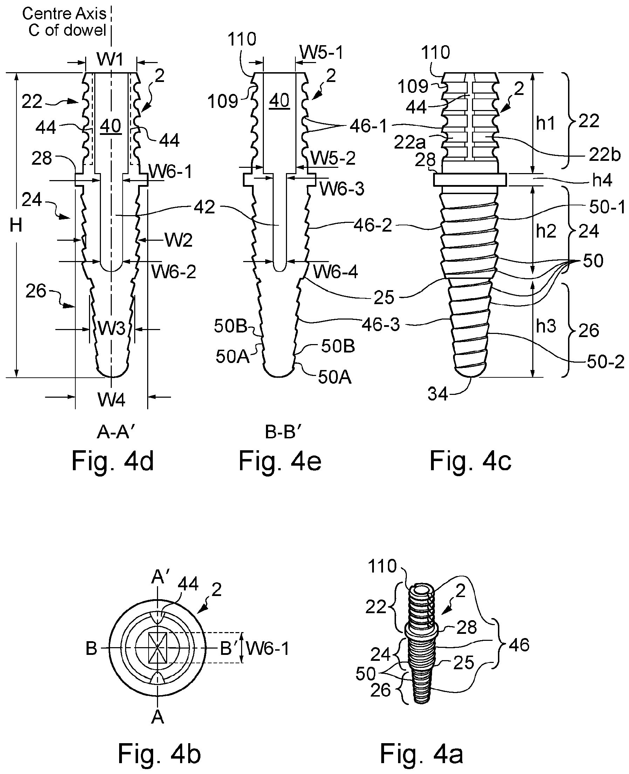

Figures 4a, 4b, 4c, 4d and 4e show a dowel 2 made e.g. from plastic such as recycled low density polyethylene (LDPE). It would be possible to use other materials such as wood or metal, but plastic is convenient. The dowel comprises at a first end, an upper first portion 22 of height h1 and at a second end, a middle second portion 24 of height h2, a lower third portion 26 of height h3 and a radial projection in the form of a (here substantially circular) collar 28 between first portion 22 and second portion 24 of height h4. The dowel is of generally circular cross-section and example dimensions include:- h1 is around 1/3 to 1/2 D, (h2 + h3) is around 4/5 D and h3 is around (4/5 to 1) h1. The total height H of the dowel is around 1.3 to 1.5 D or more preferably 1.4 to 1.5 D. The overlap of the lower third portion 26 with the upper first portion 22 when fully inserted is around 1/3 D.

First portion 22 comprises a substantially cylindrical first internal hole 40 (here a round bore), centrally and symmetrically located about central longitudinal axis C, leading to an internal, substantially rectangular second internal hole 42 also centrally located about axis C. Various sizes and cross-sectional shapes of internal first and second holes 40 and 42 are possible. Preferably, second internal hole 42 terminates at a blind end roughly radially opposite where second portion 24 meets third portion 26 at an external shoulder portion 25. Typically, cylindrical first internal hole 40 tapers gently from a maximum diameter W5-1 at an upper end of the hole and of the dowel 2, to W5-2 at a lower end opposite collar 28 forming here a truncated conical bore. Rectangular second internal hole 42 typically tapers from an upper first width W6-1 to a lower second width W6-2 in a first radial direction and from an upper third width W6-3 to a lower fourth width W6-4 in a perpendicular second radial direction. The presence of hollow internal holes 40, 42 (here elongate holes) provides some small degree of resilience (compressibility/expandability) to first and second portions 22 and 24.

The maximum external diameters of upper first portion 22 and middle second portion 24 are W1 and W2 respectively and the maximum external diameters are preferably constant along their respective heights h1 and h2. Optionally these may be of tapered width, e.g. middle section 24 may have a gently tapered overall width narrowing in a direction from collar 28 to third portion 26. The maximum external diameter of lower third portion 26 is W3 and this tapers gently towards the lowermost end of third portion 26 at tip 34, lower third portion 26 forming a generally cylindrical, tapered, cone-shaped wedge. An alternative lower third portion of generally cylindrical, gently tapered (and so generally cone-shaped wedge) of preferably cruciform cross-section is shown in Figures 9a to 10f and will be described in more detail below. Referring back to Figures 4a to 4e, the collar 28 is preferably continuous about the periphery of dowel 2 and is of generally circular cross-section of width W4. As an alternative to a continuous collar, one or more discrete projections of a variety of shapes extending radially outwards from the main body of the dowel, perpendicular to central axis C, can be envisaged.

Two opposing longitudinal grooves 44 extend along upper first portion 22 (here along the external surfaces of upper first portion 22) providing a line of weakness between two sections (here halves) 22a, 22b of first portion 22. Grooves 44 may be replaced with longitudinal gaps or one or more frangible connections between the sections 22a, 22b to form first portion 22.

The upper first portion 22 has a maximum diameter W1 that is slightly less than that of the holes (10, 12, 14, 16, 18) in block 1. Preferably, around its circumference run external surface features 46-1 here comprising recessed grooves 109 defining between themselves several horizontal ribs 110 for resisting removal of the dowel once locked in a hole. It should be noted that the peripheral surfaces of these ribs 110 are set at an angle greater than vertical as measured outwards from the centre of the dowel 2 so that these effectively point outwards and downwards. Thus, when the upper first portion is inserted into the hole in the bottom of a block and its diameter expanded as will be explained below, the ribs 110 can act to restrict relative movement to remove a block upwards from the dowel 2b in an analogous way to the external surface features 46-2 on second portion 24 that will be described later (here a spiral screw thread of predetermined cross-sectional shape on middle second portion 24 in dowel 2) but in the opposite direction. More or fewer ribs 110 (or screw thread features) than are shown in Figures 4a to 4e could be provided and various shapes are also possible. It is also noted that ribs 110 around upper first portion 22 are discontinuous about upper first portion 22, each being in two halves separated by recessed grooves 44 along upper first portion 22.

Running vertically from the top of dowel 2 almost the full length of the upper portion 22 and cutting through the ribs 110 are the two grooves 44 positioned opposite one another around the circumference of the upper portion 22 of the dowel 2. The dashed lines in Figure 4d show that the thickness of the material at these two grooves 44 is very small in comparison to the general material thickness elsewhere on the dowel, so that only a thin layer of material separates the base of the grooves 44 from the sidewall of a first internal hole 40 of dowel 2. The reason for this will be explained below when use of the dowel 2 is discussed.

It would be possible to use grooves, teeth, ribs or screw threads of different shapes from those shown in Figure 4.

First internal hole 40 is sized so that in the region of the uppermost part of dowel 2 it can comfortably receive the lowermost tip 34 of lower wedge-shaped third portion 26. Second internal hole 42 of middle second portion 24 is narrower than first internal hole 40 and as a consequence of this the side walls of the upper first portion 22 are thinner and somewhat more flexible than the walls of the middle second portion 24.

Generally conical wedge shaped lower third portion 26 has a length that is less than the upper first portion 22 of the dowel 2. It is generally shaped as a truncated cone with a rounded end 34. It is conveniently made from the same or a slightly harder material than the first or second portions 22, 24 dowels and is preferably solid throughout to make it more difficult to compress. It is generally circular in cross section and may be described as generally cylindrical and may have a continuous outer profile as shown here, and its total length h3 is about a third of the total length of the dowel 2. As will be described below in connection with Figures 9a to 10f, it may be cruciform (X-shaped) in cross-section or otherwise shaped in cross section with two or more radially extending projections (e.g. Y or T or X-shaped), the outermost profile of which (i.e. the outermost overall profile of the distal ends of the radially extending projections) is generally cylindrical although discontinuous in these embodiments, and typically defines a discontinuous second screw thread (150-2).

Referring back to Figures 4a to 4e, the widest part of the lower third portion 26, adjacent to middle second portion 24, has a diameter that is preferably at least 10% larger than the width of the first internal hole 40 at the top of upper first portion 22. It may be as much as about 15%, 20% or even 25% larger.

The rounded end 34 of the lower third portion 26 has a diameter which is slightly less than that of the first internal hole 40 at the top of the dowel 2 so that when the lower third portion 26 is first pushed (e.g. by hand) into the top of the dowel 2 it can be inserted easily and held in position.

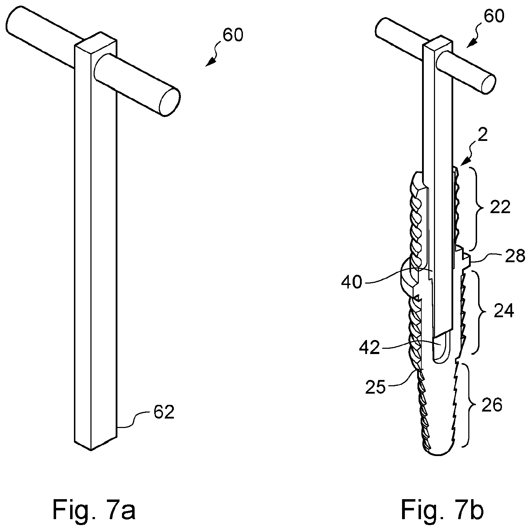

Referring again to Figures 4a to 4e, second internal hole 42 of middle second portion 24 is here of rectangular cross-section of width and depth W6-1 and W6-3 respectively at its top and width and depth W6-2 and W6-4 at its bottom forming, in effect, a tapered slot. Thus, second internal hole 42 has an internal cross-section of predetermined shape. Furthermore, there is a very gradual taper from the top to bottom of second internal hole 42. Referring briefly to Figures 7a and 7b, a shaped end 62 of an extraction tool 60 is correspondingly shaped and sized to be slidably received into second internal hole 42. The exact shape of second internal hole 42 and correspondingly shaped end 62 of an extraction tool that can be slidably received into it, may vary, but it must be sufficient for purchase to be applied to the second internal hole 42 and so to the dowel when the shaped end 62 of tool 60 is rotated within the second internal hole 42. Various suitable shapes can be envisaged, for example, second internal hole 42 and shaped end 62 may be of generally, or substantially rectangular, square, star, triangle, octagonal, hexagonal, posi-drive shaped cross sections etc. Extraction tool 60 may be provided with a handle, and is provided with at least a shank. The shank may be shaped (e.g. hex shaped) to engage a correspondingly shaped handle or power tool (e.g. a power drill).

Dowel 2 is provided with external surface features 46-2, 46-3, here in the form of external screw threads 50-1 and 50-2 to provide a, here continuous, screw thread 50, along part or almost substantially all of heights h2 and h3 of middle second and lower third portions 24 and 26.

As will be seen in relation to Figures 9a to 10f, portions of the screw thread 50 (e.g. on the lower third portion 26, 126) may be discontinuous, e.g. with gaps between distal ends of radially extending projections or radial walls of lower third portion 126, which together line up to form a discontinuous second screw thread 150-2 (see Fig 9a).

External surface features 46-1, 46-2 and 46-3 (146-3 in Fig 9a) are provided on first, second and third portions respectively, preferably along all or substantially all of the respective heights, h1, h2 and h3 of each.

Lower third portion 26 need not be provided with a screw thread (indeed lower portion 26 could be formed as a smoothly tapered cone shaped wedge). However it is advantageous if it is provided with a screw thread 50-2 (150-2 in Fig 9a) of preferably the same pitch and preferably the same size and shape as screw thread 50-1 of middle second portion 24. To be received in upper first internal hole 40 of a second dowel, lower third portion 26 is of narrower overall width than middle second portion 24. Therefore, the screw thread 50-1 and 50-2 on portions 22 and 24 are arranged to meet at a tapered shoulder 25 so as to form a near continuous screw thread 50 extending from narrower, tapered lower third portion 26 to wider, non-tapered middle second portion 24. The height of the tapered shoulder is preferably approximately equal to or less than the pitch height of the screw thread 50, to facilitate a smooth transition from screw thread 50-1 to 50-2 and vice versa.

The cross-sectional shape of the screw thread 50 itself may be of any suitable shape such as triangular, square, truncated cone etc. In a particularly advantageous embodiment, the cross-section of external screw thread(s) 50-1, and preferably also 50-2, is/are of generally, or substantially a scalene triangular shape, having three sides of different length. This form of screw thread includes and may be known more widely as a buttress screw thread. Selection of such a scalene triangular cross-section such as a buttress screw thread provides advantageous effects when used on the dowel. Relative to central axis C, the cross-section of the screw thread has an angled long side 50A facing downwardly and extending generally radially outwards, a short side 50B facing upwards. By arranging for a longest side 50A of the screw thread triangular cross-section to be angled radially upwards and outwards in a direction from tip 34 to shoulder 25, the screw thread is more easily inserted in a translational motion tip end first into a hole, than retrieved. This buttress type screw thread shape, and in particular upwardly facing short side 50B, resists translational extraction of screw thread 50-1 from a hole (typically upwardly) and preferably also screw-thread 50-2 from a first dowel. Thus, first and second dowels are held together firmly in a longitudinal direction (along their central axis, C) by the connection between the first and second dowels themselves unlike prior art dowels.

Furthermore, extraction is now much simplified. By rotating a dowel with respect to the block, the dowel can be extracted. The further challenge of gaining purchase to effect rotation of the dowel 2 in the block 1 is solved by providing a shaped second internal hole 42, here in the form of a shaped slot. The shaped internal slot is preferably in the middle second portion 24 although other arrangements e.g. a shaped slot within collar 28 or near the base of upper first portion 22, might be used, with suitable adjustments of relative heights of the dowel portions. Shaped second internal hole 42 within middle second portion 24 allows purchase and rotational force to be applied at a central region of the dowel, i.e. around the region of shoulder 25 and over almost the whole of the height h2 of middle portion 24. The application of rotational force along part or most of height h2 of elongate middle portion 24 reduces the pressure and spreads the application of the force. There is therefore less risk of torsional failure of the dowel, or of its external surface features for example if excessive rotational force is used which otherwise might result in slippage of the tool within the slot (second internal hole 42), or damage to the external surface features 46-1, 46-2 and 46-3.

Figure 9a shows an alternative dowel of integral construction with a lower third portion 126. Here, lower third portion 126 is of solid construction with four (only one can be seen) elongate external surface recesses 147, here longitudinally arranged, extending from the second portion 24 towards the tip 34 of the third portion 126. Grooves 147 reduce the amount of material, typically plastic, and improves cooling times in the moulding tool.

As a result of the elongate external recesses 147, four elongate radial projections (radially projecting side walls) are formed terminating in external surface features 146-3. The external surface features 146-3 comprise a series of intermittent structures of predetermined (screw-thread) shape which together form an intermittent (discontinuous) screw thread 150-2 on lower third portion 126. It will be understood that external surface features 146-3 cooperate together to provide a second screw thread 150-2 which, whilst discontinuous, functions and operates as a traditional screw thread just as if a continuous screw thread were provided. In other words, external surface features 146-3 align in a screw thread manner to provide a functioning screw thread 150-2.

Figures 9b to 9d show, respectively, cross-sections through the dowel of Figure 9a at angles 0°, 90°, and 45°, illustrating the different widths and thicknesses of second internal slot 42 within the second portion 24, and the different widths and thicknesses of lower third portion 126 depending upon the angle at which the cross-section is taken.

Figures 10a to 10c show the elongate external recesses 147 extending longitudinally along third portion 126 providing an overall cruciform cross-section to lower third portion 126 (as seen along the direction of arrow A near tip 34, which here is also rounded).

Figures 10d to 10f show the various widths and thicknesses as seen when a cross-section is taken at various different angles through dowel 2. One or more longitudinal recessed arrow(s) 45 may be provided through the first screw thread features 50-1 on middle portion 24 to indicate the direction of insertion of the dowel into a hole into which it is to be received.

In Figure 10g four recessed grooves 147 delineate between four radial projections which terminate in surface features 146-3. The surface features 146-3 comprise a continuous screw thread 150-2 about the circumference of lower third portion 126 to allow extraction of the dowel in an anticlockwise direction (or vice versa). Optionally, the side walls of the radial projections (i.e. the side walls of grooves 147) have one or more, or preferably, a series of vertically separated bevels (or fillets) 64a, 164a, 264a (seen on one radial projection), 64b (seen on the next radial projection anticlockwise), 64c (seen on the next radial projection anti clockwise) in particular on the surfaces features 146-3 forming the screw thread 150-2. The bevels (64a, 164a, 264a, 64b, 64c) reduce and typically eliminate any sharp edges of screw thread 150-2 that may connect with the internal surfaces of upper first portion 22 e.g. with the grooves 44 of upper first portion 22 of another dowel during extraction. When the dowel is turned anticlockwise during removal there are fewer or no sharp edges to catch on the spilt formed from grooves 44.

The opposite side walls to these "shaped" side walls of the radial projections with bevels, are typically flat, extending along radii of the dowel.

The construction process will now be described in more detail with reference to figures 5a to 5d, 6a to 6d and 8a to 8c.

In general terms, the dowel comprises first, second and third portions in line with one another along a central longitudinal axis, C. Preferably the distal end of the third portion is of narrower diameter than the proximal end of the first portion so that it can be received in it. The tapering first internal hole 40 of upper portion 22 receives the tapering third portion 26 and is wedged open by it. During insertion (here translational insertion) of the third portion 26 of dowel 26 into the first portion 22 of dowel 2a, a radial force is exerted on the first portion 22, breaking open grooves 44 and spreading the sections 22a, 22b of upper first portion 22 radially outwards. One or more, but preferably, two or more e.g. two or three grooves 44 (or similar structures such as lines of weakness or frangible connections) may be provided. The material of dowel 2 is somewhat elastic, so sections 22a, 22b can pivot radially outwards. Thus, the sections (22a, 22b) of first portion 22 when formed, pivot radially outwards about their base, near collar 28 by the action of the wedge-shaped lower third portion 26 entering first internal hole 40. When third portion 26 is removed (as described elsewhere) sections 22a, 22b return pivoting back wholly or partly to their original position, disengaging external surface features 110 wholly or partly from contact with the internal side wall of first internal hole 40, releasing its connection to the block and allowing it to be more easily slidably removed.

Again, in general terms, the dowel 2 is designed so that when the middle second portion 22 is driven (in a translational manner) into hole(s) 10 (e.g. by a hammer using a sleeve acting on collar 28) of a first lower block 1a, it becomes fixed such that the collar 28 sits in seat 20 and the top of the collar 28 is flush with the upper surface 4 of the block 1a. Thus the upper first portion 22 of the dowel 2 is in a position to receive hole(s) 10 of a second, identical upper block 1b to be placed on top of the first block 1a. At that point, the external surface features 46-2 (here an external screw thread 50-1) of middle second portion 24 hold the dowel fast in the holes of the lower block. However, since the diameter of the top portion of the dowels is less than that of the holes 10 in the upper block 1b, the upper block 1b can be slid easily down to envelop the projecting upper portions of the dowels. The upper first portion 22 of the dowel 2 protrudes from the top face 4 of the first, lower block 1a and the pre-drilled holes 10 of a second, upper block 1b are placed over these and pushed firmly into position.

The dowel 2 is designed so that it may be used for temporary constructions, which can be a more permanent wall structure that is rigidly fixed together but is relatively easy to dismantle.

The upper first portion 22 is sized to be freely slidably received in holes 10 whereas the middle second portion 24 is sized to be snugly pushed or preferably hammer-fitted, into the same holes 10. Whilst upper and lower portions 22, 24 may be differently sized and respective portions of holes 10 adapted to cooperate with these differently sized upper and lower portions, it is convenient that each fits respectively, slidably and snugly into the same holes 10 so that holes 10 can be manufactured as a single through bore in a single step.

Figures 8a-1 and 8a-2 show the first stage of joining together a first, lower block 1a and a second, upper block 1b. The middle second portion 24 of a first dowel 2a is hammered into a hole 10 (e.g. hole 12) in block 1a. The dowel 2a is stopped in the correct vertical position by virtue of collar 28 fitting into seat 20 of block 1a. The upper first portion 22 of dowel 2a rests above the top face 14 of block 1a.

A second block 1b is placed on top of first block 1a so that drilled receiving hole 10 (e.g. hole 18) of block 1b fits over upper portion 22 of first dowel 2a and blocks 1a, 1b are held flush together. The reason that it is hole 18 of block 1b rather than hole 12 is because of the preference for constructing a wall with alternate layers of bricks being in a staggered arrangement as is known in the art.

Then, a second dowel 2b, is hammered vertically downwards into hole 10 of second, upper block 1b, so that the rounded end 34 of the lower portion 26 centres over hole 10 of dowel 2a and has moved some way into it (see Figure 8b-1).

Having reached this stage, some force is required to drive wedge-shaped lower third portion 26 of second dowel 2b in a translational motion further into hole 10 of second dowel 2b and also into the first internal hole 40 of first dowel 2a to make the construction more permanent in nature, and to drive the middle portion 24 of second dowel 2b, again in a translational motion, into the top of block 1b until its collar 28 sits flush in recess 20 of block 1b. This stage is shown in Figures 8c-1 and 8c-2.

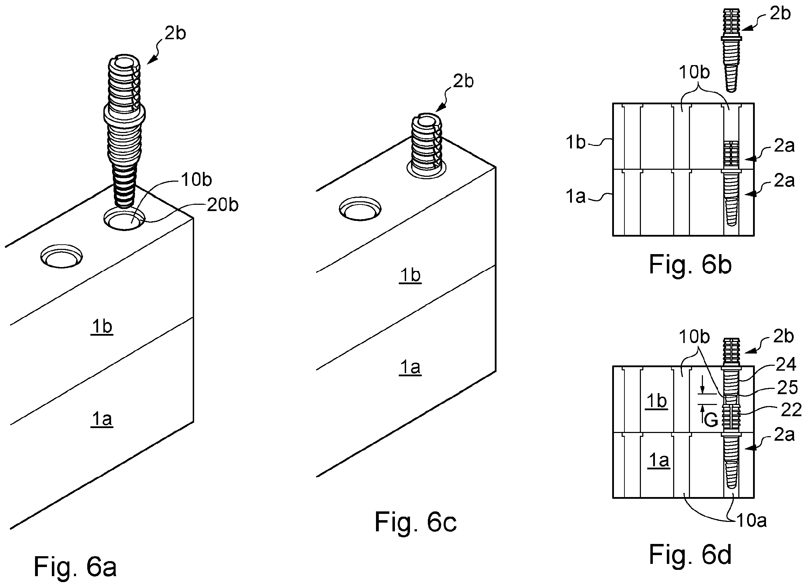

The final position is shown in figures 6c, 6d, 8c-1 and 8c-2, in which collar 28 of blocks 1a, 1b are both flush with the top faces 4 of their respective blocks. It is convenient for thin material in grooves 44 to be frangible so that when lower third portion 26 of second dowel 2b is inserted into upper first portion 22 of first dowel 2a, one or both of grooves 44 splits, thus separating upper portion 22 of first dowel 2a vertically, which allows resultant sections 22a, 22b to be forced radially outwards against the walls of the hole 10. Because the material of the dowel is somewhat resilient sections 22a, 22b of the upper first portion 22 can be pushed outwards, pivoting slightly near collar 28. Similarly if the wedge (third portion 26) is removed, the sections 22a, 22b of first portion 22 can rebound, resiliently returning to close to their initial position without the dowel.

To protect the second dowel 2b from damage whilst being hammered into position, a sleeve (not shown), which may, for example, be made of steel or high density polyethylene (HDPE) and whose length is slightly longer than the upper first portion 22 of second dowel 2b, is fitted over the upper first portion 22 of the dowel 2b so that its bottom edge rests on the upper surface of the collar 28. The steel sleeve is generally cylindrical in shape and is open at its bottom end so that it can be fitted over the dowel 2b. Its top end is a suitable shape to minimise deformation during repeated hammering and to efficiently transfer the impact force to the dowel 2b. Thus the force of hammering is transferred directly and evenly onto the collar and so the stronger middle second portion 24 of second dowel 2b. A suitably tough material other than steel, such as HDPE or other materials, could be used.

It can be understood from Figures 6d, 8c-1 and 8c-2 and the description above that the lengths of the three portions 22, 24, 26 of dowel 2 are sized at slightly less than 1/2 D so that when in position fixing two blocks 1a, 1b, the two dowels and in particular upper first portion 22 of first dowel 2a and middle second portion 24 of second dowel 2b do not touch. Instead they are separated by roughly the depth of the shoulder portion 25 (best seen as gap G in Figure 6d).

As is understood from Figure 1, in order to connect any given two blocks, there will be more than one dowel connection required. Thus in practice, the above-described process would be the same for the equivalent holes in blocks 1a and 1b and the process could furthermore be used to construct a wall as described in GB2363807B.

Figure 7 shows a shaped distal member 62 on an extraction tool 60 for inter-engaging with the shaped internal second hole 42 of the second portion of a dowel 2. The second internal hole 42 preferably extends into dowel 2 until its base is generally level in a radial direction with shoulder 25. The shaped distal member preferably engages with second internal hole 42 along a portion of its length, preferably along substantially all of the length of second internal hole 42, to provide greater area (within dowel 2) on which force can be applied.

To de-construct the blocks, steps A to B of Figure 8 are modified and reversed. Instead of using translation force to slide dowels 2a, 2b into their respective blocks, rotational force is used to extract them. Firstly, an extraction tool 60 with correspondingly shaped distal end 62 is slid into place into second internal hole 42 of second dowel 2b. Next, rotational force is applied to the handle of tool 60 which is transmitted to external screw threads 50-1 and 50-2, of middle second portion 24 and lower third portion 26 respectively causing these to travel over the walls of the hole(s) 10. Where wood is used, wood is typically softer than the dowel material, rotational extraction motion occurs, effectively 'self-tapping' in reverse. Next the second dowel 26 comes free from and is removed from second block 1b. Once the wedge-shaped lower third portion 26 is removed from between sections 22a and 22b of upper first portion 22 of first dowel 2a, the sections 22a, 22b resiliently retract wholly into or partially within hole 10 and, the second block 1b can now be freely lifted, or if necessary levered, off the first dowel 2a and first block 1a. Finally, extraction tool 60 can be inserted into the first dowel 1a, which can be rotationally extracted from the first block 1a.

Variations can be envisaged from the present disclosure, for example, different screw thread cross-sections (such as isosceles, square, cone, truncated cone etc) may be used. Whilst screw threads 50-1, and 50-2 where provided, are preferably of asymmetric triangular cross-section with a leading side wall 50A facilitating translational insertion or indeed rotational insertion and a trailing side wall 50B resisting translational extraction, other screw threads could be used, such as symmetric triangular screw threads with equal side walls or other cross-sectional shapes. Various materials can be used for the blocks and dowels but it is preferable the dowel screw thread can properly engage and achieve purchase on the internal wall(s) of a hole to resist translational extraction but facilitate rotational extraction.

The actual dimensions of the blocks, dowels and wedges could be widely varied, depending on the intended application. Furthermore, it is not necessary for all the holes in a particular block to be the same size, although since suitably sized dowels are needed for proper construction of a wall, economy of manufacture and packing is maximised by using identically sized holes. Although wood is the most suitable material for the blocks, other materials such as plastics or metals could be used. The blocks and dowels could be sold as a kit for building a particular-sized wall, or could be sold loose, so that customers could buy exactly the number required and could vary the dimensions of the wall and the choice of capping section. The shape of the dowels and wedges could be varied within the scope of the invention.

It would also be possible to use a wall constructed in this way for many other applications. In particular, such a wall could be used horizontally for decking and table tops It could also be used (in various sizes and dimensions) for fixing panels, block paving, finials, timber edging etc. It would also be useful for holding awkward shaped pieces of wood together whilst gluing two surfaces together.

Typically, first, second and third portions 22, 24 and 26 are elongate but shorter, squatter, wider dowels could also be provided. First internal hole 40 is also typically elongate (unless shorter, wider dowels are provided). In any embodiment, a short second internal hole 42 could be provided (much like the blind recess on the head of a prior art screw) but it is preferred that second internal hole 42 is elongate and engages with a cooperating, elongate shaped end of an extraction tool, along much of the second internal hole 42 and indeed preferably along a significant part of the height h2 of second portion 24. This is so the extraction tool 60 can provide purchase along a significant part of the dowel and so reduce the risk of torsional failure of the dowel.

Any structure constructed as described above can be fitted to the ground using ground plates or spikes and can be finished off using capping sections.

It will be appreciated that other sizes of blocks can be used; with different arrangements of holes. It would also be possible to use holes and dowels of a different shape. Furthermore, if desired, the blocks could be constructed with dowels incorporated, for example, just in the upper faces, although this would be likely to make a kit more expensive. The holes could of course be formed by a method other than drilling. In certain forms, the construction kit would be suitable for use as a toy.
**1 - blocks**
1a - lower first block
1b - second upper block
**2 - dowels**
2a - first dowel
2b - second dowel
122 - columns of dowels interlinking
4 - top face of block
5 - bottom face of block
6 - front face
7 - rear face
8 - LHS face
9 - RHS face
10 12 14 16 18 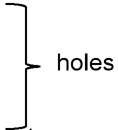 20 - seat
22 - upper first portion
24 - middle second portion
25 - shoulder portion
26 - lower third portion
28 - collar/radial projection
30 - first wall
32 - second wall
34 - rounded tip
40 - first internal hole
42 - second internal hole
44 - groove/line of weakness
45 - external surface recessed arrow
46 - external surface features (46-1,46-2, 46-3)
50 - screw thread features (50-1 screw thread on middle second portion, 50-2 screw thread on lower third portion)
60 - extraction tool 80
62 - shaped end
64 - 64a, 164a, 264a, 64b, 64c - bevels (bevelled leading edges of screw-thread) D (depth), W (width) L (length) of wall block
**H** - **height of dowel**
h1 - height of first portion
h2 - height of second portion
h3 - height of third portion
h4 - height of collar
W1 - width of first portion
W2 - width of second portion
W3 - maximum width of third portion
W4 - width of collar
W5 - maximum width of tapering first internal hole (w5-1, w5-2 - max and min widths of (circular) side wall of (tapering) first internal hole
W6 - maximum width of tapering second internal hole (w6-1, w6-2, w6-3, w6-4 - max and min widths of four (tapering) side walls in second internal hole
G - short gap between top of 22 of 2a and bottom of 24 of 2b
109 - recessed grooves
110 - horizontal ribs
126 - shaped (here of cruciform cross-section) lower third portion
146-3 - discontinuous (intermittent) external surface features
147 - elongate external surface recess
150-2 - discontinuous (intermittent) screw thread on lower third portion 126
A - direction of view along central axis C toward base of lower third portion 126
C - central axis of dowel

## Claims

1. A dowel (2, 2a, 2b) for joining blocks (1, 1a, 1b) comprising:
at a first end,
- a generally cylindrical first portion (22) having a first internal hole (40) along it, the first portion (22) configured for radial expansion when a radial force is applied within the first internal hole (40);
at a second end,
- a generally cylindrical second portion (24);
- depending from the second portion (24), a generally cylindrical third portion (26), configured for reception into a first internal hole (40) of a further dowel (2, 2a, 2b) to provide a radial force capable of expanding a first portion (22) of a further dowel (2, 2a, 2b);
- a radial projection (28) between the first and second portions (22, 24) configured to limit insertion of the second portion (24) into a hole (10) in a block (1, 1a, 1b) in which the second portion (24) is capable of being received;
- at least the second portion (22) having external surface features (46-1) configured to resist translational movement relative to a hole (10) in a block (1, 1a, 1b) in which the respective portion is capable of being received;
- and further wherein, the external surface features (46-2) of at least the second portion (24) comprise an external first screw thread (50-1) configured to provide rotational movement relative to a hole (10) in a block (1, 1a, 1b) into which the second portion (24) is capable of being received, to enable extraction of the second portion (24) from the hole (10).

2. A dowel according to claim 1 in which at least the first and second portions (22, 24) have external surface features (46-1, 46-2) configured to resist translational movement relative to a hole (10) in a block (1, 1a, 1b) in which the respective portion is capable of being received.

3. A dowel (2, 2a, 2b) according to claim 1 or 2 in which the first screw thread (50-1) comprises a cross-section configured to facilitate translational insertion and to resist translational extraction; and/or,
in which the first screw thread (50-1) has a generally, or substantially, triangular cross-section; and/or,
in which the first screw thread (50-1) has a triangular cross-section comprising: a slanted longer first face (50A) leading radially outwards from a central, longitudinal axis along the dowel (2, 2a, 2b), in a direction from the third portion towards the second portion and a shorter second face (50B) generally, or substantially, perpendicular to the central longitudinal axis along the dowel (2, 2a, 2b).

4. A dowel (2, 2a, 2b) according to any preceding claim in which the first screw thread (50-1) of the second portion (24) is of substantially constant overall width (W2) along the second portion (24); and/or,
in which the cross-section of the first screw thread (50-1) is substantially the same along the second portion (24).

5. A dowel (2, 2a, 2b) according to any preceding claim in which the third portion (26) is provided with external surface features (46-3) comprising an external second screw thread (50-2) configured to provide rotational movement relative to the first internal hole (40) into which the third portion (26) is capable of being received to enable extraction of the third portion (26) from the first internal hole (40).

6. A dowel (2, 2a, 2b) according to claim 5 in which the second screw thread (50-2) comprises a cross-section configured to facilitate translational insertion and to resist translational extraction; and/or,
in which the second screw thread (50-2) has a generally or substantially triangular cross-section; and/or,
in which the second screw thread (50-2) has a triangular cross-section comprising: a slanted, longer first face (50A) leading radially outwards from a central longitudinal axis of the dowel, in a direction from the third portion towards the second portion and a shorter second face (50B), generally, or substantially, perpendicular to the central longitudinal axis.

7. A dowel (2, 2a, 2b) according to any of claims 5 to 6 in which the second screw thread (50-2) comprises a tapered screw thread, the width of the screw thread narrowing in a direction from the second portion (24) to the third portion (26).

8. A dowel (2, 2a, 2b) according to any of claims 5 to 7 in which the second screw thread (50-2) is continuous or
in which the second screw thread (50-2) is discontinuous (150-2).

9. A dowel (2, 2a, 2b) according to any of claims 5 to 8 in which the third portion (26) comprises one or more elongate surface recesses (147) defining elongate radial projections, the distal portions of which are configured to provide the second screw thread (50-2), optionally, the elongate radial projections forming a generally cruciform or generally Y-shaped, or generally T-shaped cross-section.

10. A dowel (2, 2a, 2b) according to any of claims 5 to 9 in which the respective first and second screw threads (50-1, 50-2) are screw threads of substantially the same pitch and/or substantially the same cross-section.

11. A dowel (2, 2a, 2b) according to any of claims 5 to 10 in which the second portion (24) is of greater diameter than the third portion (26) and in which a slanted shoulder portion (25) is provided in-between the first and second screw threads (50-1, 50-2) with external surface features (46-2, 46-3) that cooperate with the first screw thread (50-1) on the second portion (24) and the second screw thread (50-2) on the third portion (26) to provide continuity from the first to the second screw thread (50-1, 50-2).

12. A dowel (2, 2a, 2b) according to any preceding claim in which, contiguous with the first internal hole (40), a second internal hole (42), optionally generally or substantially located within the second portion (24), is provided to allow an extraction tool (60) to be received therein via the first internal hole (40); optionally,
in which the second internal hole (42) comprises first inter-engaging features for interengagement with an extraction tool (60) having corresponding second inter-engaging features; optionally,
in which the second internal hole (42) has a cross-section of predetermined shape; and /or
in which the second internal hole (42) is tapered, narrowing in a direction from the first portion (22) to the second portion (24).

13. A dowel according to any preceding claim in which the third portion (26) is of solid interior construction; and/or,
in which the dowel is integrally formed.

14. A kit comprising:
- a dowel (2, 2a, 2b) according to any of claims 1 to 13; and,
at least one of:
- a block (1, 1a, 1b), having at least one hole (10, 12, 14, 16, 18) optionally at least two holes (10, 12, 14, 16, 18), for receiving a dowel (2, 2a, 2b);
- a plurality of blocks (1, 1a, 1b), each having at least one hole (10, 12 14, 16, 18), optionally at least two holes (10, 12, 14, 16, 18), for receiving a dowel (2, 2a, 2b);
- an extraction tool (60), for extracting the dowel (2, 2a, 2b) from a block (1, 1a, 1b) comprising, at a proximal end, a shank, and optionally a handle, and, at a distal end, a shaped member (62) for engaging with a shaped second internal hole (42) of a dowel (2, 2a, 2b).

15. A method of constructing and de-constructing a wall comprising:
a) inserting the second end of a first dowel (2a) according to any of the claims 1 to 13 into a first cylindrical hole (10a) of a first block (1a), the first cylindrical hole (10a) having a seat (20) about a periphery on a top face (4) of the block (1a), until the radial projection (28) is engaged in the seat (20);
b) rotating the first dowel (2a) to extract it from the first block (1a);
optionally, comprising one or more of the following steps:
c) placing a corresponding second cylindrical hole (10b) of a second block (1b) about the first portion (22) of the first dowel (2a) so that the second block (1b) rests on the first block (1a);
d) inserting the second end of a second dowel (2b) according to any of claims 1 to 12 into the second cylindrical hole (10b) of the second block (1b), having a seat (20) about the radial periphery of the second hole (10b), until the radial projection (28) of the second dowel (2b) is engaged in the seat (20);
e) inserting the third portion (26) of the second dowel (2b) into the first portion (22) of the first dowel (2a) to apply a radial force to the first internal hole (40), so expanding the first portion (22) of the first dowel (2a) until its external surface features (46-1) engage an inner side wall of the first internal hole (40);
f) rotating the second dowel (2b) to extract it from the first dowel (2a) and from the second block (1b).

## Patentansprüche

1. Dübel (2, 2a, 2b) zum Verbinden von Blöcken (1, 1a, 1b), umfassend:
an einem ersten Ende,
- einen im Allgemeinen zylindrischen ersten Abschnitt (22) mit einem ersten Innenloch (40) entlang ihm, wobei der erste Abschnitt (22) für radiale Expansion konfiguriert ist, wenn eine radiale Kraft innerhalb des ersten Innenlochs (40) ausgeübt wird;
an einem zweiten Ende,
- einen im Allgemeinen zylindrischen zweiten Abschnitt (24);
- abhängig von dem zweiten Abschnitt (24) einen im Allgemeinen zylindrischen dritten Abschnitt (26), der zur Aufnahme in einem ersten Innenloch (40) eines weiteren Dübels (2, 2a, 2b) konfiguriert ist, um eine radiale Kraft bereitzustellen, die in der Lage ist, einen ersten Abschnitt (22) eines weiteren Dübels (2, 2a, 2b) zu expandieren;
- einen radialen Vorsprung (28) zwischen dem ersten und dem zweiten Abschnitt (22, 24), der konfiguriert ist, um Einsetzen des zweiten Abschnittes (24) in ein Loch (10) in einem Block (1, 1a, 1b) zu begrenzen, in dem der zweite Abschnitt (24) in der Lage ist, aufgenommen zu werden;
- wobei zumindest der zweite Abschnitt (22) äußere Oberflächenmerkmale (46-1) aufweist, die konfiguriert sind, um translatorischer Bewegung relativ zu einem Loch (10) in einem Block (1, 1a, 1b) zu widerstehen, in dem der jeweilige Abschnitt in der Lage ist, aufgenommen zu werden;
- und wobei ferner die äußeren Oberflächenmerkmale (46-2) von zumindest dem zweiten Abschnitt (24) ein äußeres erstes Schraubengewinde (50-1) umfassen, das konfiguriert ist, um Drehbewegung relativ zu einem Loch (10) in einem Block (1, 1a, 1b) bereitzustellen, in dem der zweite Abschnitt (24) in der Lage ist, aufgenommen zu werden, um Extraktion des zweiten Abschnittes (24) aus dem Loch (10) zu ermöglichen.

2. Dübel nach Anspruch 1, wobei zumindest der erste und der zweite Abschnitt (22, 24) äußere Oberflächenmerkmale (46-1, 46-2) aufweisen, die konfiguriert sind, um translatorischer Bewegung relativ zu einem Loch (10) in einem Block (1, 1a, 1b) zu widerstehen, in dem der jeweilige Abschnitt in der Lage ist, aufgenommen zu werden.

3. Dübel (2, 2a, 2b) nach Anspruch 1 oder 2, wobei das erste Schraubengewinde (50-1) einen Querschnitt umfasst, der konfiguriert ist, um translatorisches Einsetzen zu erleichtern und translatorischer Extraktion zu widerstehen; und/oder
wobei das erste Schraubengewinde (50-1) einen im Allgemeinen oder im Wesentlichen dreieckigen Querschnitt aufweist; und/oder
wobei das erste Schraubengewinde (50-1) einen dreieckigen Querschnitt aufweist, umfassend: eine schräge längere erste Fläche (50A), die radial nach außen von einer zentralen Längsachse entlang des Dübels (2, 2a, 2b) in einer Richtung von dem dritten Abschnitt zu dem zweiten Abschnitt führt, und eine kürzere zweite Fläche (50B), im Allgemeinen oder im Wesentlichen senkrecht zu der zentralen Längsachse entlang des Dübels (2, 2a, 2b).

4. Dübel (2, 2a, 2b) nach einem vorhergehenden Anspruch, wobei das erste Schraubengewinde (50-1) des zweiten Abschnittes (24) von im Wesentlichen konstanter Gesamtbreite (W2) entlang des zweiten Abschnittes (24) ist; und/oder
wobei der Querschnitt des ersten Schraubengewindes (50-1) entlang des zweiten Abschnittes (24) im Wesentlichen gleich ist.

5. Dübel (2, 2a, 2b) nach einem vorhergehenden Anspruch, wobei der dritte Abschnitt (26) mit äußeren Oberflächenmerkmalen (46-3) bereitgestellt ist, die ein äußeres zweites Schraubengewinde (50-2) umfassen, das konfiguriert ist, um Drehbewegung relativ zu dem ersten Innenloch (40) bereitzustellen, in das der dritte Abschnitt (26) in der Lage ist, aufgenommen zu werden, um Extraktion des dritten Abschnittes (26) aus dem ersten Innenloch (40) zu ermöglichen.

6. Dübel (2, 2a, 2b) nach Anspruch 5, wobei das zweite Schraubengewinde (50-2) einen Querschnitt umfasst, der konfiguriert ist, um translatorisches Einsetzen zu erleichtern und um translatorischer Extraktion zu widerstehen; und/oder
wobei das zweite Schraubengewinde (50-2) einen im Allgemeinen oder im Wesentlichen dreieckigen Querschnitt aufweist; und/oder
wobei das zweite Schraubengewinde (50-2) einen dreieckigen Querschnitt aufweist, umfassend: eine schräge, längere erste Fläche (50A), die radial nach außen von einer zentralen Längsachse des Dübels in einer Richtung von dem dritten Abschnitt zu dem zweiten Abschnitt führt, und eine kürzere zweite Fläche (50B), im Allgemeinen oder im Wesentlichen senkrecht zu der zentralen Längsachse.

7. Dübel (2, 2a, 2b) nach einem der Ansprüche 5 bis 6, wobei das zweite Schraubengewinde (50-2) ein sich verjüngendes Schraubengewinde umfasst, wobei sich die Breite des Schraubengewindes in einer Richtung von dem zweiten Abschnitt (24) zu dem dritten Abschnitt (26) verengt.

8. Dübel (2, 2a, 2b) nach einem der Ansprüche 5 bis 7, wobei das zweite Schraubengewinde (50-2) durchgehend ist, oder
wobei das zweite Schraubengewinde (50-2) diskontinuierlich (150-2) ist.

9. Dübel (2, 2a, 2b) nach einem der Ansprüche 5 bis 8, wobei der dritte Abschnitt (26) eine oder mehrere längliche Oberflächenvertiefungen (147) umfasst, die längliche radiale Vorsprünge definieren, deren distale Abschnitte konfiguriert sind, um das zweites Schraubengewinde (50-2) bereitzustellen, wobei optional die länglichen radialen Vorsprünge einen im Allgemeinen kreuzförmigen oder im Allgemeinen Y-förmigen oder im Allgemeinen T-förmigen Querschnitt bilden.

10. Dübel (2, 2a, 2b) nach einem der Ansprüche 5 bis 9, wobei das jeweilige erste und zweite Schraubengewinde (50-1, 50-2) Schraubengewinde von im Wesentlichen der gleichen Steigung und/oder im Wesentlichen dem gleichen Querschnitt sind.

11. Dübel (2, 2a, 2b) nach einem der Ansprüche 5 bis 10, wobei der zweite Abschnitt (24) von größerem Durchmesser als der dritte Abschnitt (26) ist und wobei ein schräger Schulterabschnitt (25) zwischen dem ersten und dem zweiten Schraubengewinde (50-1, 50-2) bereitgestellt ist, mit äußeren Oberflächenmerkmalen (46-2, 46-3), die mit dem ersten Schraubengewinde (50-1) an dem zweiten Abschnitt (24) und dem zweiten Schraubengewinde (50-2) an dem dritten Abschnitt (26) kooperieren, um Kontinuität von dem ersten zu dem zweiten Schraubengewinde (50-1, 50-2) bereitzustellen.

12. Dübel (2, 2a, 2b) nach einem vorhergehenden Anspruch, wobei angrenzend an das erste Innenloch (40) ein zweites Innenloch (42) bereitgestellt ist, das sich optional im Allgemeinen oder im Wesentlichen innerhalb des zweiten Abschnittes (24) befindet, um zu ermöglichen, dass ein Extraktionswerkzeug (60) darin über das erste Innenloch (40) aufgenommen wird; optional
wobei das zweite Innenloch (42) erste Eingriffsmerkmale zum Eingriff mit einem Extraktionswerkzeug (60) umfasst, das entsprechende zweite Eingriffsmerkmale aufweist; optional
wobei das zweite Innenloch (42) einen Querschnitt von vorbestimmter Form aufweist; und/oder
wobei das zweite Innenloch (42) verjüngt ist, sich in einer Richtung von dem ersten Abschnitt (22) zu dem zweiten Abschnitt (24) verengt.

13. Dübel nach einem vorhergehenden Anspruch, wobei der dritte Abschnitt (26) von massiver Innenkonstruktion ist; und/oder
wobei der Dübel einstückig gebildet ist.

14. Kit, umfassend:
- einen Dübel (2, 2a, 2b) nach einem der Ansprüche 1 bis 13; und
zumindest eines des Folgenden:
- einen Block (1, 1a, 1b), der zumindest ein Loch (10, 12, 14, 16, 18), optional zumindest zwei Löcher (10, 12, 14, 16, 18) aufweist, um einen Dübel (2, 2a, 2b) aufzunehmen;
- eine Vielzahl von Blöcken (1, 1a, 1b), die jeweils zumindest ein Loch (10, 12 14, 16, 18), optional zumindest zwei Löcher (10, 12, 14, 16, 18) aufweisen, um einen Dübel (2, 2a, 2b) aufzunehmen;
- ein Extraktionswerkzeug (60) zum Extrahieren des Dübels (2, 2a, 2b) aus einem Block (1, 1a, 1b), umfassend, an einem proximalen Ende, einen Schaft, und optional einen Griff, und, an einem distalen Ende, ein geformtes Element (62) zum Eingriff mit einem geformten zweiten Innenloch (42) eines Dübels (2, 2a, 2b).

15. Verfahren zum Konstruieren und Dekonstruieren einer Wand, umfassend:
a) Einsetzen des zweiten Endes eines ersten Dübels (2a) nach einem der Ansprüche 1 bis 13 in ein erstes zylindrisches Loch (10a) eines ersten Blocks (1a), wobei das erste zylindrische Loch (10a) einen Sitz (20) um einen Umfang an einer oberen Fläche (4) des Blocks (1a) aufweist, bis der radiale Vorsprung (28) in den Sitz (20) eingreift;
b) Drehen des ersten Dübels (2a), um ihn aus dem ersten Block (1a) zu extrahieren;
optional umfassend einen oder mehrere der folgenden Schritte:
c) Platzieren eines entsprechenden zweiten zylindrischen Lochs (10b) eines zweiten Blocks (1b) um den ersten Abschnitt (22) des ersten Dübels (2a), sodass der zweite Block (1b) auf dem ersten Block (1a) aufliegt;
d) Einsetzen des zweiten Endes eines zweiten Dübels (2b) nach einem der Ansprüche 1 bis 12 in das zweite zylindrische Loch (10b) des zweiten Blocks (1b), der einen Sitz (20) um den radialen Umfang des zweiten Lochs (10b) aufweist, bis der radiale Vorsprung (28) des zweiten Dübels (2b) in den Sitz (20) eingreift;
e) Einsetzen des dritten Abschnittes (26) des zweiten Dübels (2b) in den ersten Abschnitt (22) des ersten Dübels (2a), um eine radiale Kraft auf das erste Innenloch (40) auszuüben, wodurch der erste Abschnitt (22) des ersten Dübels (2a) expandiert wird, bis seine äußeren Oberflächenmerkmale (46-1) in eine innere Seitenwand des ersten Innenlochs (40) eingreifen;
f) Drehen des zweiten Dübels (2b), um ihn aus dem ersten Dübel (2a) und aus dem zweiten Block (1b) zu extrahieren.

## Revendications

1. Cheville (2, 2a, 2b) pour joindre des blocs (1, 1a, 1b) comprenant :
à une première extrémité,
- une première partie (22) généralement cylindrique possédant un premier trou interne (40) le long de celle-ci, la première partie (22) étant configurée pour une expansion radiale lorsqu'une force radiale est appliquée à l'intérieur du premier trou interne (40) ;
à une deuxième extrémité,
- une deuxième partie (24) généralement cylindrique ;
- en fonction de la deuxième partie (24), une troisième partie (26) généralement cylindrique, configurée pour être reçue dans un premier trou interne (40) d'une autre cheville (2, 2a, 2b) pour fournir une force radiale capable d'étendre une première partie (22) d'une autre cheville (2, 2a, 2b) ;
- une protubérance radiale (28) entre les première et deuxième parties (22, 24) configurée pour limiter l'insertion de la deuxième partie (24) dans un trou (10) d'un bloc (1, 1a, 1b) dans lequel la deuxième partie (24) est susceptible d'être reçue ;
- au moins la deuxième partie (22) possédant des caractéristiques de surface externe (46-1) configurées pour résister à un mouvement de translation par rapport à un trou (10) dans un bloc (1, 1a, 1b) dans lequel la partie respective est susceptible d'être reçue ;
- et en outre dans lequel, les caractéristiques de surface externe (46-2) d'au moins la deuxième partie (24) comprennent un premier filetage externe (50-1) configuré pour fournir un mouvement de rotation par rapport à un trou (10) dans un bloc (1, 1a, 1b) dans lequel la deuxième partie (24) est susceptible d'être reçue, pour permettre l'extraction de la deuxième partie (24) du trou (10).

2. Cheville selon la revendication 1, dans laquelle au moins les première et deuxième parties (22, 24) ont des caractéristiques de surface externe (46-1, 46-2) configurées pour résister à un mouvement de translation par rapport à un trou (10) dans un bloc (1, 1a, 1b) dans lequel la partie respective est susceptible d'être reçue.

3. Cheville (2, 2a, 2b) selon la revendication 1 ou 2, dans laquelle le premier filetage (50-1) comprend une section transversale configurée pour faciliter l'insertion en translation et pour résister à l'extraction en translation ; et/ou,
dans lequel le premier filetage (50-1) présente une section transversale généralement ou sensiblement triangulaire ; et/ou,
dans lequel le premier filetage (50-1) possède une section transversale triangulaire comprenant : une première face inclinée plus longue (50A) menant radialement vers l'extérieur à partir d'un axe central longitudinal le long de la cheville (2, 2a, 2b), dans une direction de la troisième partie vers la deuxième partie et une deuxième face plus courte (50B) généralement, ou sensiblement, perpendiculaire à l'axe longitudinal central le long de la cheville (2, 2a, 2b).

4. Cheville (2, 2a, 2b) selon une quelconque des revendications précédentes, dans laquelle le premier filetage (50-1) de la deuxième partie (24) est d'une largeur totale sensiblement constante (W2) le long de la deuxième partie (24) ; et/ou,
dans laquelle la section transversale du premier filetage (50-1) est sensiblement la même le long de la deuxième partie (24).

5. Cheville (2, 2a, 2b) selon une quelconque des revendications précédentes, dans laquelle la troisième partie (26) est pourvue d'éléments de surface externes (46-3) comprenant un deuxième filetage externe (50-2) configuré pour fournir un mouvement de rotation par rapport à au premier trou interne (40) dans lequel la troisième partie (26) est susceptible d'être reçue pour permettre l'extraction de la troisième partie (26) du premier trou interne (40).

6. Cheville (2, 2a, 2b) selon la revendication 5, dans laquelle le deuxième filetage (50-2) comprend une section transversale configurée pour faciliter l'insertion en translation et pour résister à l'extraction en translation ; et/ou,
dans laquelle le deuxième filetage (50-2) possède une section transversale généralement ou sensiblement triangulaire ; et/ou,
dans laquelle le deuxième filetage (50-2) possède une section transversale triangulaire comprenant : une première face inclinée plus longue (50A) menant radialement vers l'extérieur à partir d'un axe longitudinal central de la cheville, dans une direction allant de la troisième partie vers la deuxième partie et une deuxième face plus courte (50B), généralement, ou sensiblement, perpendiculaire à l'axe longitudinal central.

7. Cheville (2, 2a, 2b) selon une quelconque des revendications 5 à 6, dans laquelle le deuxième filetage (50-2) comprend un filetage conique, la largeur du filetage se rétrécissant dans une direction allant de la deuxième partie (24) à la troisième partie (26).

8. Cheville (2, 2a, 2b) selon une quelconque des revendications 5 à 7, dans laquelle le deuxième filetage (50-2) est continu ou
dans laquelle le deuxième filetage (50-2) est discontinu (150-2).

9. Cheville (2, 2a, 2b) selon une quelconque des revendications 5 à 8, dans laquelle la troisième partie (26) comprend un ou plusieurs évidements de surface allongés (147) définissant des projections radiales allongées, dont les parties distales sont configurées pour fournir le deuxième filetage (50-2), optionnellement, les protubérances radiales allongées formant une section transversale généralement cruciforme ou généralement en forme de Y, ou généralement en forme de T.

10. Cheville (2, 2a, 2b) selon une quelconque des revendications 5 à 9, dans laquelle les premier et deuxième filetages respectifs (50-1, 50-2) sont des filetages sensiblement du même pas et/ou sensiblement de la même section transversale.

11. Cheville (2, 2a, 2b) selon une quelconque des revendications 5 à 10, dans laquelle la deuxième partie (24) est d'un diamètre supérieur à la troisième partie (26) et dans laquelle une partie d'épaulement inclinée (25) est prévue dans entre les premier et deuxième filetage (50-1, 50-2) avec des éléments de surface externes (46-2, 46-3) qui coopèrent avec le premier filetage (50-1) sur la deuxième partie (24) et le deuxième filetage (50-2) sur la troisième partie (26) pour assurer la continuité du premier au deuxième filetage (50-1, 50-2).

12. Cheville (2, 2a, 2b) selon une quelconque des revendications précédentes, dans laquelle, contigu au premier trou interne (40), un deuxième trou interne (42), éventuellement généralement ou sensiblement situé à l'intérieur de la deuxième partie (24), est prévu pour permettre à un outil d'extraction (60) d'y être reçu via le premier trou interne (40) ; optionnellement,
dans laquelle le deuxième trou interne (42) comprend des premiers éléments de mise en prise mutuelle en vue d'une mise en prise mutuelle avec un outil d'extraction (60) possédant des deuxièmes éléments de mise en prise mutuelle correspondants ; optionnellement,
dans laquelle le deuxième trou interne (42) possède une section transversale de forme prédéterminée ; et/ou
dans laquelle le deuxième trou interne (42) est conique, se rétrécissant dans une direction allant de la première partie (22) à la deuxième partie (24).

13. Cheville selon une quelconque des revendications précédentes, dans laquelle la troisième partie (26) est de construction intérieure solide ; et/ou,
dans laquelle la cheville est formée en un seul tenant.

14. Kit comprenant :
- une cheville (2,2a,2b) selon une quelconque des revendications 1 à 13 ; et
au moins l'un des éléments suivants :
- un bloc (1, 1a, 1b), comportant au moins un trou (10, 12, 14, 16, 18) optionnellement au moins deux trous (10, 12, 14, 16, 18), pour recevoir une cheville (2, 2a, 2b) ;
- une pluralité de blocs (1, 1a, 1b), comportant chacun au moins un trou (10, 12 14, 16, 18), optionnellement au moins deux trous (10, 12, 14, 16, 18), pour recevoir une cheville (2, 2a, 2b) ;
- un outil d'extraction (60), pour extraire la cheville (2, 2a, 2b) d'un bloc (1, 1a, 1b) comprenant, à une extrémité proximale, une tige, et optionnellement un manche, et, à une extrémité distale, un élément profilé (62) pour une mise en prise dans un deuxième trou interne profilé (42) d'une cheville (2, 2a, 2b).

15. Procédé de construction et de déconstruction d'un mur comprenant :
a) l'insertion de la deuxième extrémité d'une première cheville (2a) selon une quelconque des revendications 1 à 13 dans un premier trou cylindrique (10a) d'un premier bloc (1a), le premier trou cylindrique (10a) possédant un siège (20) autour d'une périphérie sur une face supérieure (4) du bloc (1a), jusqu'à ce que la protubérance radiale (28) soit mise en prise dans le siège (20) ;
b) la rotation de la première cheville (2a) pour l'extraire du premier bloc (1a) ;
éventuellement, comprenant une ou plusieurs des étapes suivantes :
c) le placement d'un deuxième trou cylindrique correspondant (10b) d'un deuxième bloc (1b) autour de la première partie (22) de la première cheville (2a) de sorte que le deuxième bloc (1b) repose sur le premier bloc (1a) ;
d) l'insertion de la deuxième extrémité d'une deuxième cheville (2b) selon une quelconque des revendications 1 à 12 dans le deuxième trou cylindrique (10b) du deuxième bloc (1b), possédant un siège (20) autour de la périphérie radiale du deuxième trou (10b), jusqu'à ce que la protubérance radiale (28) de la deuxième cheville (2b) soit mise en prise dans le siège (20) ;
e) l'insertion de la troisième partie (26) de la deuxième cheville (2b) dans la première partie (22) de la première cheville (2a) pour appliquer une force radiale au premier trou interne (40), en élargissant ainsi la première partie (22) de la première cheville (2a) jusqu'à ce que ses caractéristiques de surface externe (46-1) viennent en prise dans une paroi latérale interne du premier trou interne (40) ;
f) la rotation de la deuxième cheville (2b) pour l'extraire de la première cheville (2a) et du deuxième bloc (1b).
